# EUROPEAN PATENT APPLICATION

(11) **EP 1 707 411 A1**
(43) Date of publication of application: **04.10.2006**
(21) Application number: 06006161.1
(22) Date of filing: 24.03.2006
(51) Int. Cl.: B60H 1/32, F25B 43/00

(54) **Vehicular air-conditioner**

(30) Priority: 28.03.2005 JP 2005092564
(71) Applicant: Calsonic Kansei Corporation, Tokyo 164-8602 (JP)
(72) Inventor: Takahashi, Torahide Calsonic Kansei Corp., Tokyo 164-8602 (JP); Maruyama, Tomohiro Calsonic Kansei Corp., Tokyo 164-8602 (JP)
(74) Representative: Grünecker, Kinkeldey, Stockmair & Schwanhäusser Anwaltssozietät

(57) **Abstract**

A compressor compresses a refrigerant. A radiator cools the refrigerant compressed by the compressor. An expansion valve receives the refrigerant from the radiator to depressurize and expand the refrigerant. An evaporator evaporates the refrigerant expanded by the expansion valve to cool air passing through the evaporator. An accumulator receives the refrigerant from the evaporator to separate the refrigerant into a gas-phase refrigerant and a liquid-phase refrigerant. The accumulator includes an insertion portion inserted in the accumulator and included in a pipe arranged from the radiator to the expansion valve for exchanging heat between a refrigerant flowing through the insertion portion and at least the liquid-phase refrigerant in the accumulator.

## Description

### CROSS-REFERENCE TO RELATED APPLICATIONS

This application is based upon and claims the benefit of priority from Japanese Patent Application No. 2005-092564 filed on March 28, 2005; the entire contents of which are incorporated herein by reference.

### BACKGROUND OF THE INVENTION

The invention relates to a vehicular air-conditioner, and in particular to a vehicular air-conditioner using a cooling medium such as carbon dioxide having supercritical higher-pressure side.

A related vehicular air-conditioner integrally includes an internal heat-exchanger and an accumulator. The related art is, for example, described in document 1: Japanese Patent Application Laid-open No. 2000-227289 (Paragraphs 0015 to 0018, and Fig. 1), document 2: Japanese Patent Application Laid-open No. 2004-100974 (Paragraphs 0019 to 0026, and Fig. 4), and document 3: Japanese Patent Application Laid-open No. 2002-206823 (Paragraphs 0019 to 0021, and Fig. 3). Document 1 describes "Integral header and heat exchanger assembly" that includes a storage chamber and a heat exchanger sub-assembly in a casing. A higher-pressure cooling medium is fed from an external heat-exchanger to flow into a higher-pressure passage of the heat exchanger sub-assembly. A lower-pressure cooling medium is fed from an evaporator to flow into a lower-pressure passage in the heat exchanger sub-assembly. The higher-pressure and lower-pressure cooling mediums are heat-exchanged to each other in the heat-exchanger sub-assembly. Simultaneously, the cooling medium fed from the evaporator enters in the storage chamber, lubrication oil contained in the cooling medium settles on the bottom of the storage chamber and the lubrication oil is fed from the bottom to a compressor. The related art reduces the number of parts for the cooling apparatus to achieve compactness.

Document 2 describes "Accumulator and refrigeration cycle using the same" that integrally includes an internal heat-exchanger around a cooling medium housing space in an accumulator. The structure simplifies piping in a cooling apparatus, thus achieving compactness.

Document 3 describes "Accumulator module" that houses an internal heat-exchanger in an accumulator to simplify piping in a cooling apparatus and reduce the number of assembling steps.

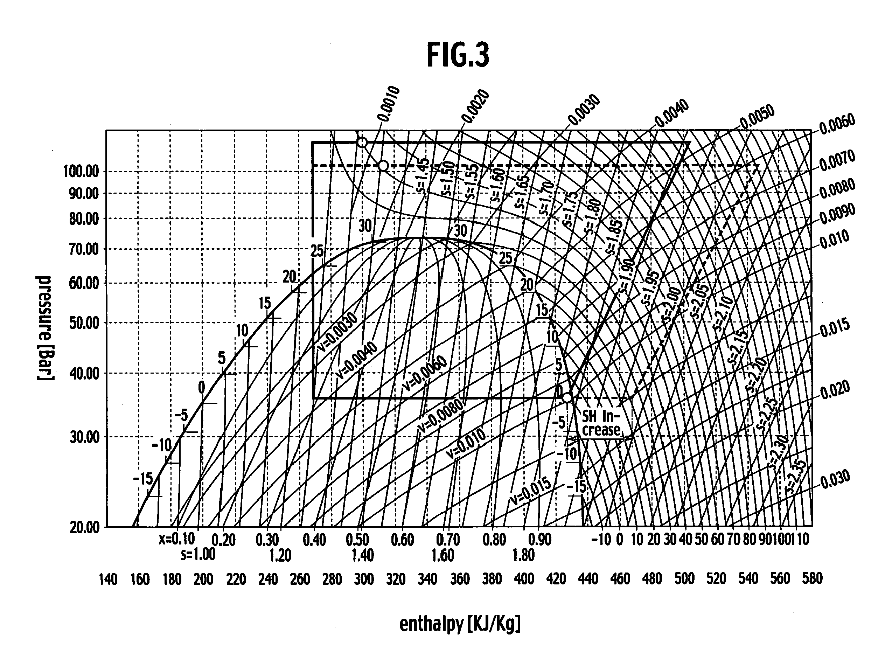

The related arts described in the documents 1 to 3 have a compact structure and have a reduced number of parts. However, as shown with a dotted line in Fig. 3, a cooling medium flow rate Q is reduced 20% due to rising of a saturated vapor pressure SH of the cooling medium from 0°C to 25°C. This reduction of the flow rate reduces cooling performance E and coefficient of performance COP. A temperature Td of the cooling medium rises at an outlet of the compressor. The temperature rising reduces the life of a rubber part, a resin part, or the like provided in a passage for the cooling medium.

### SUMMARY OF THE INVENTION

The invention is directed to a vehicular air-conditioner that has a simple structure and has a reduced number of parts, where cooling performance and coefficient of performance are improved without elevating a saturated vapor pressure of a cooling medium.

The invention provides a vehicular air-conditioner (20). The air-conditioner includes a compressor (1) for compressing a refrigerant. The air-conditioner includes a radiator (2) for cooling the refrigerant compressed by the compressor. The air-conditioner includes an expansion valve (4) for receiving the refrigerant from the radiator to depressurize and expand the refrigerant. The air-conditioner includes an evaporator (5) for evaporating the refrigerant expanded by the expansion valve to cool air passing through the evaporator. The air-conditioner includes an accumulator (22) for receiving the refrigerant from the evaporator to separate the refrigerant into a gas-phase refrigerant and a liquid-phase refrigerant.

The accumulator includes an insertion portion (23, 32) inserted in the accumulator and included in a pipe (21) arranged from the radiator to the expansion valve for exchanging heat between a refrigerant flowing through the insertion portion and at least the liquid-phase refrigerant in the accumulator.

According to the invention, while higher-temperature and higher-pressure refrigerant fed from the radiator passes through the insertion portion, the refrigerant exchanges heat with at least the liquid phase refrigerant. This heat-exchange allows the higher-temperature refrigerant to be fed from the radiator to the expansion valve to be cooled and lower-temperature refrigerant to return from the evaporator to the compressor to be heated. This operation enhances the cooling performance and the coefficient of performance without rising saturated vapor pressure of the cooling medium. The lower-pressure portion of the related internal heat exchanger is replaced with the accumulator without requiring a specific internal heat-exchanger, thus providing a simple arrangement with the reduced number of parts. Thus, the air-conditioner becomes compact with excellent cooling efficiency.

### BRIEF DESCRIPTION OF THE ACCOMPANYING DRAWINGS

Fig. 1 is a block diagram of a vehicular air-conditioner according to a first embodiment of the invention;
Fig. 2 is a front view of an accumulator of the vehicular air-conditioner illustrated in Fig. 1;
Fig. 3 is a characteristic diagram of performances of the vehicular air-conditioner illustrated in Fig. 1;
Fig. 4 is a block diagram of a vehicular air-conditioner according to a second embodiment of the invention;
Fig. 5 is a sectional view of an insertion portion of a vehicular air-conditioner according to a third embodiment of the invention;
Fig. 6 is a sectional view of a modification of the insertion portion illustrated in Fig. 5;
Fig. 7 is a vertical sectional view of an accumulator of a vehicular air-conditioner according to a fourth embodiment of the invention;
Fig. 8 is a front view of a flat multi-hole tube of the vehicular air-conditioner illustrated in Fig. 7;
Fig. 9 is a plan view of a heat-exchange member for an insertion portion illustrated in Fig. 7;
Fig. 10 is an explanatory view of a heat-exchange member for a vehicular air-conditioner according to a fifth embodiment of the invention;
Fig. 11 is a sectional view of an insertion portion for a vehicular air-conditioner according to a sixth embodiment of the invention;
Fig. 12 is a sectional view of a first modification of a heat transfer fin illustrated in Fig. 11;
Fig. 13 is a sectional view of a second modification of the heat transfer fin illustrated in Fig. 11;
Fig. 14 is a sectional view of a third modification of the heat transfer fin illustrated in Fig. 11;
Fig. 15 is a sectional view of an accumulator of a vehicular air-conditioner according to a seventh embodiment of the invention;
Fig. 16 is a sectional view of a modification of an inlet piping in the accumulator illustrated in Fig. 15; and
Fig. 17 is a sectional view of an accumulator of a vehicular air-conditioner according to an eighth embodiment of the invention.

### DETAILED DESCRIPTION OF THE PREFERRED EMBODIMENTS

Details of a vehicular air-conditioner according to embodiments of the invention will be described below with reference to the drawings.

### First Embodiment

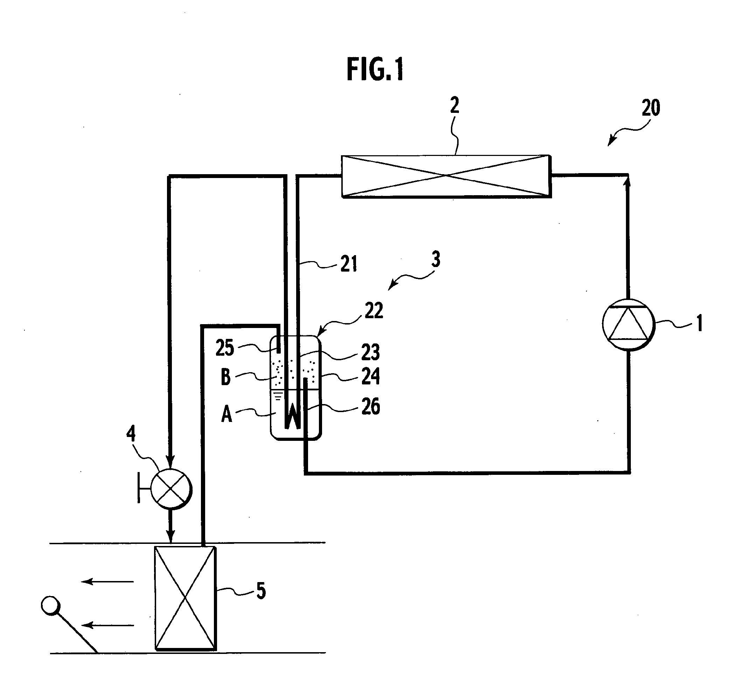

As shown in Fig. 1, a vehicular air-conditioner (hereinafter, "air-conditioner") 20 includes a compressor 1 that compresses a cooling medium to discharge a higher-temperature and higher-pressure cooling medium. The air-conditioner 20 includes a radiator 2 (an external heat-exchanger) that cools the higher-temperature and higher-pressure cooling medium fed from the compressor 1. The air-conditioner 20 includes an internal heat-exchanger 3 that performs heat-exchange between the higher-temperature and higher-pressure cooling medium received from the radiator 2 and a lower-temperature and lower-pressure cooling medium returned from an evaporator 5 (described later) back to the compressor 1. The air-conditioner 20 includes an expansion valve 4 that reduces pressure of the cooling medium sequentially cooled in the radiator 2 and the internal heat-exchanger 3 to expand the cooling medium. The air-conditioner 20 includes an evaporator 5 that evaporates a cooling medium expanded in the expansion valve 4 to cool air passing therethrough. The internal heat-exchanger 3 includes an accumulator 22 that separates the cooling medium fed from the evaporator 5 into gas phase and liquid phase to feed a cooling medium with gas phase to the compressor 1.

The internal heat-exchanger 3 has an insertion portion 23 serving as a heat transfer tube that is inserted into the accumulator 22 and that is a portion of a pipe 21 extending from the radiator 2 to the expansion valve 4. The higher-temperature and higher-pressure cooling medium passing through the pipe 21 performs heat-exchange with at least a cooling medium with liquid phase within the accumulator 22.

The accumulator 22 includes a cylindrical casing 24 forming an outer shell and reserving a cooling medium. The accumulator 22 has an inlet pipe 25 and an outlet pipe 26 that are respectively arranged at the upper portion and the lower portion of the casing 24. The interior of the casing 24 is separated to a region occupied by a cooling medium A with liquid phase having a larger specific gravity and a region occupied by a cooling medium B with gas phase having a smaller specific gravity. The end portion of the inlet pipe 25 is positioned at the upper portion (the region occupied by the cooling medium B with gas phase) of the casing 24, and opens down. The end portion of the outlet pipe 26 is positioned at the intermediate portion (the region occupied by the cooling medium B with gas phase) of the casing 24, and opens up. The insertion portion 23 of the pipe 21 is bent at the lower portion (the region occupied by the cooling medium A with liquid phase) within the casing 24.

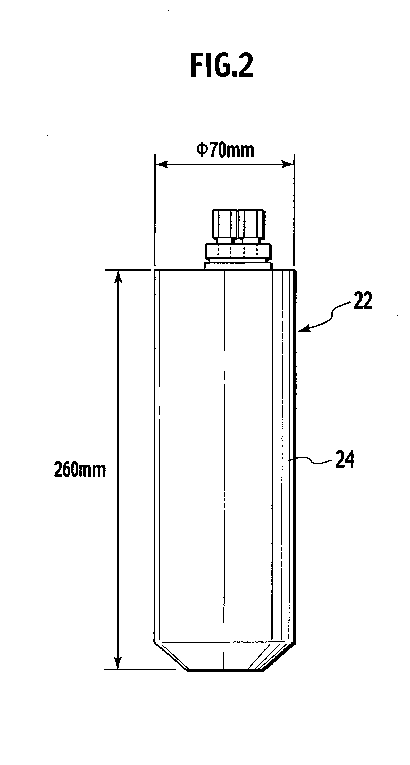

As illustrated in Fig. 2, the casing 24 of the accumulator 22 is set to, for example, an outer diameter of 70 mm and a height of 260 mm. The accumulator 22 has a total volume of 560 cm³. In the total volume, a gas volume (a volume of the region occupied by the cooling medium B with gas phase) is 100 cm³, a liquid volume (a volume of the region occupied by the cooling medium A with liquid phase) is 460 cm³, and a charged amount of the cooling medium is 800 g. An estimated amount of the cooling medium A with liquid phase remaining in the casing 24 is 410g at a heating time assuming an external air temperature of -20°C, while it is 340g at a cooling time assuming an external air temperature of 40°C. When the cooling medium A with liquid phase within the casing 24 is 340 g, a height of a liquid surface within the casing 24 is 12 cm. The height of a liquid surface sufficiently ensures a space allowing dipping of the insertion portion 23 of the pipe 21 into the cooling medium A with liquid phase within the casing 24.

According to the vehicular air-conditioner 20, the compressor 1 compresses a cooling medium made from carbon dioxide to discharge a higher-temperature and higher-pressure cooling medium under a supercritical pressure. The radiator 2 discharges heat to cool the higher-temperature and higher-pressure cooling medium. The internal heat-exchanger 3 cools the cooling medium to feed the same to the expansion valve 4. The expansion valve 4 depressurizes and expands the cooling medium, thereby producing a lower-temperature and lower-pressure wet vapor. The evaporator 5 performs heat-exchange with air passing to evaporate the cooling medium. The air is cooled by the evaporator 5 and the cooled air is supplied to a vehicle compartment or the like. The evaporator 5 then feeds the cooling medium including gas phase and liquid phase mixed with each other to the internal heat-exchanger 3. The accumulator 22 separates the cooling medium into gas phase and liquid phase. The lower-temperature cooling medium is heat-exchanged with a middle-temperature cooling medium flowing out of the radiator 2. The lower-temperature cooling medium is heated to be completely vaporized and returns back to the compressor 1.

The lower-temperature and lower-pressure cooling medium fed from the evaporator 5 enters from the inlet pipe 24 to the casing 24 of the accumulator 22. The cooling medium A with liquid phase remains in the casing 24, while the cooling medium B with gas phase flows out of the casing 24 via the outlet pipe 26 to the compressor 1. At that time, the lubrication oil is fed to an intake side of the compressor 1 via a pipe (not shown) by oil breed. The higher-temperature cooling medium fed from the radiator 2 is heat-exchanged with the lower-temperature cooling medium in the casing 24 while passing through the insertion portion 23 of the pipe 21.

According to the first embodiment, the internal heat-exchanger 3 cools the middle-temperature cooling medium fed from the radiator 2 to the expansion valve 4 and heats the lower-temperature cooling medium that returns from the evaporator 5 back to the compressor 1. The heat-exchanger 3 improves cooling performance and coefficient of performance without rising a saturated vapor pressure of the cooling medium. As indicated by a solid line in Fig. 3, setting of the saturated vapor pressure SH of the cooling medium to 0°C increases the cooling medium flow rate Q and improves adiabatic efficiency, thus reducing an enthalpy difference between the inlet and the outlet of the compressor 1. Thereby, power F of the compressor 1 does not vary even if the cooling medium flow rate Q increases. As a result of the improvement of the cooling performance E, the coefficient of performance COP improves. The power F of the compressor 1, the cooling performance E, and the coefficient of performance COP (performance coefficient) are obtained according to the following equations:
(1) Power F of compressor 1 = cooling medium flow rate Q x enthalpy difference between inlet and outlet of compressor 1;
(2) Cooling performance E = cooling medium flow rate Q x enthalpy difference between inlet and outlet of evaporator 5; and
(3) Coefficient of performance COP = cooling performance E ÷ power F of compressor 1.

Broken lines in Fig. 3 indicate performances of the related arts described above.

According to the first embodiment, rising of the temperature Td of a cooling medium at the outlet of the compressor 1 is also suppressed, thus improving reliabilities of rubber and resin parts. The lower pressure side portion of the internal heat-exchanger is replaced with the accumulator 22, and reduces the number of parts with a simple structure, without requiring an internal heat-exchanger.

### Second Embodiment

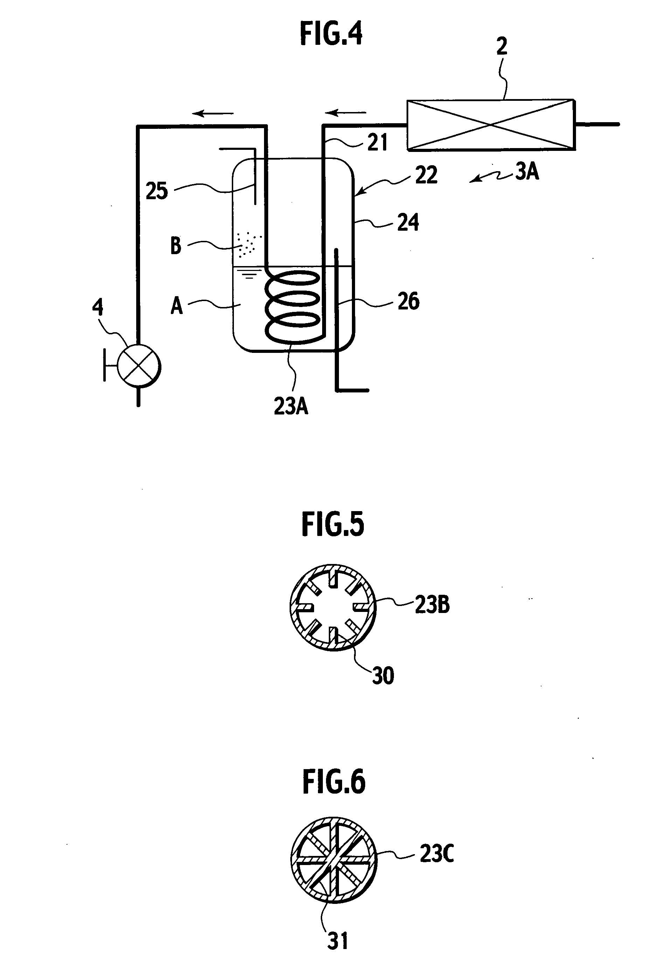

As shown in Fig. 4, the air-conditioner 20 has the following feature as compared with that of the first embodiment illustrated in Fig. 1.

An internal heat-exchanger 3A has a helical insertion portion 23A serving as a pipe 21 extending from the radiator 2 to the expansion valve 4 within a region occupied by the cooling medium A with liquid phase within the casing 24. The helical insertion portion 23A enlarges a heat transfer area thereof. The insertion portion 23A enhances heat transfer between the higher-temperature cooling medium and the lower-temperature cooling medium within the casing 24, particularly, the cooling medium A with liquid phase, during flowing of the higher-temperature cooling medium.

According to the second embodiment, a heat transfer rate between the higher-temperature cooling medium fed from the radiator 2 to the expansion valve 4 and the lower-temperature cooling medium returned from the evaporator 5 back to the compressor 1 is improved, thus achieving a further compact configuration.

### Third Embodiment

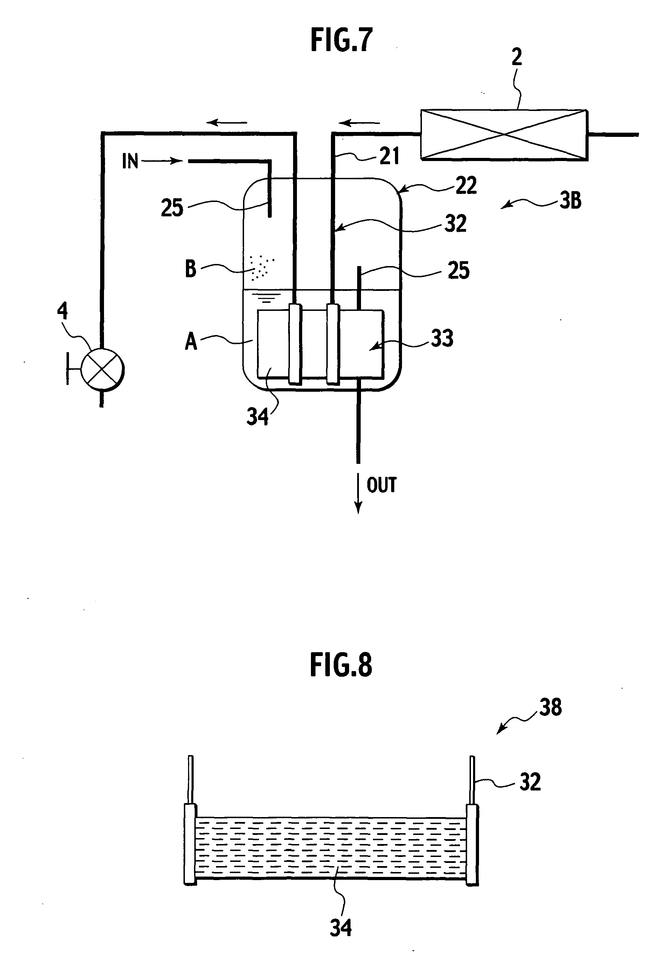

As shown in Fig. 5, a third embodiment has the following feature as compared with the first embodiment illustrated in Fig. 1. An insertion portion 23B serving as a pipe 21 extending from the radiator 2 to the expansion valve 4 has a plurality of heat transfer fins 30 projecting from the inner face of the insertion portion 23B to the center thereof and extending in a direction in which the cooling medium flows or in a longitudinal direction of the pipe 21.

While the higher-temperature cooling medium flows in the insertion portion 23B, the heat transfer fins 30 enhance heat transfer between the higher-temperature cooling medium and the cooling medium within the casing 24.

According to the third embodiment, since a heat transfer rate between the higher-temperature cooling medium returned from the radiator 2 back to the expansion valve 4 and the lower-temperature cooling medium fed from the evaporator 5 to the compressor 1 is improved, a further compact configuration is achieved.

The third embodiment illustrates the plurality of heat transfer fins 30 projecting inside the insertion portion 23B. The invention is not limited to this embodiment. As shown in Fig. 6, an insertion portion 23C includes a plurality of heat transfer fins 31 crossing the inner space of the insertion portion 23C inside thereof.

### Fourth Embodiment

As shown in Fig. 7, an internal heat-exchanger 3C according to a fourth embodiment has the following feature as compared with the first embodiment illustrated in Fig. 1. An insertion portion 32 serving as a pipe 21 extending from the radiator 2 to the expansion valve 4 includes a heat-exchange member 33.

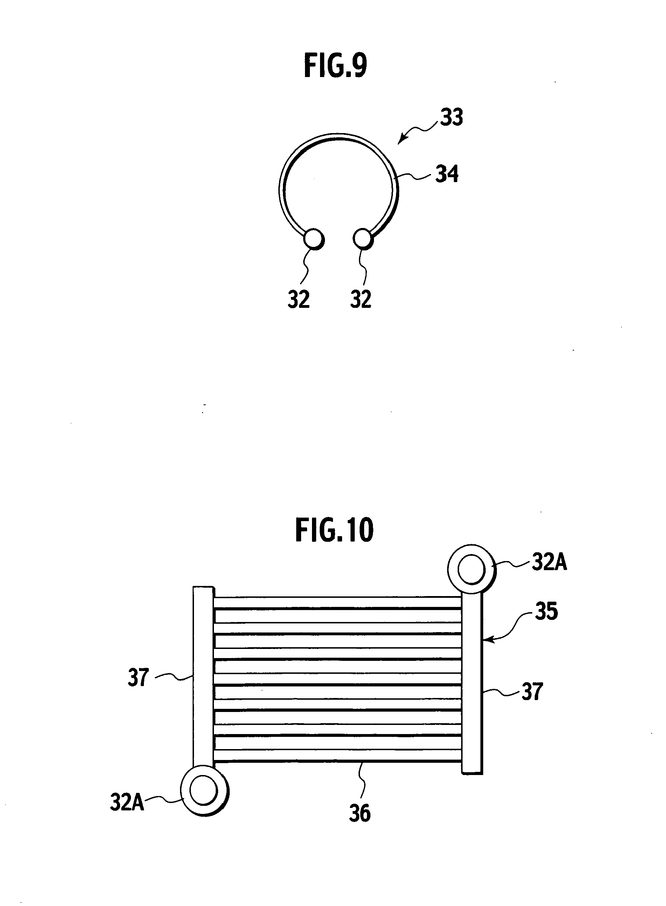

The heat-exchange member 33 includes a plain flat multi-hole tube 34 illustrated in Fig. 8. The tube 34 is curved as illustrated in Fig. 9. The heat-exchange member 33 is arranged at the lower portion of the casing 24, namely, in a region occupied by the cooling medium A with liquid phase.

While the higher-temperature cooling medium flows in the insertion portion 32 of the pipe 21 extending from the radiator 2 to the expansion valve 4, the heat-exchange member 33 enhances heat-exchange with the lower-temperature cooling medium within the casing 24, especially, the cooling medium A with liquid phase.

The insertion portion 32 of the pipe 21 extending from the radiator 2 to the expansion valve 4 is enlarged in the heat transfer area, which improves heat transfer efficiency, thus achieving a further compact configuration.

The heat-exchange member 33 is formed by curving the plain flat multi-hole tube 34. The heat-exchange member 33 may be formed by curving the plain flat multi-hole tube 34 in a corrugated manner.

### Fifth Embodiment

As shown in Fig. 10, a fifth embodiment has the following feature as compared with the fourth embodiment illustrated in Fig. 7. An insertion portion 32A serving as a pipe 21 extending from the radiator 2 to the expansion valve 4 includes another heat-exchange member 35.

The heat-exchange member 35 includes flat multi-hole tubes 36 arranged in multiple rows and a pair of headers 37 connected to both ends of the flat multi-hole tubes 36. The heat-exchange member 35 is arranged at the lower portion of the casing 24, namely, in a region occupied by the cooling medium A with liquid phase.

While the higher-temperature cooling medium flows in the insertion portion 32A of the pipe 21 extending from the radiator 2 to the expansion valve 4, the heat-exchange member 35 enhances heat-exchange with the lower-temperature cooling medium within the casing 24, especially, the cooling medium A with liquid phase, and the higher-temperature cooling medium.

According to the fifth embodiment, the insertion portion 32A of the pipe 21 extending from the radiator 2 to the expansion valve 4 is enlarged in the heat transfer area, which improves a heat transfer rate like the fourth embodiment illustrated in Fig. 7. This arrangement achieves a further compact apparatus configuration. The flat multi-hole tubes arranged in multiple rows are not subjected to a bending work, thus improving the heat exchange member 36 in reliability of strength.

### Sixth Embodiment

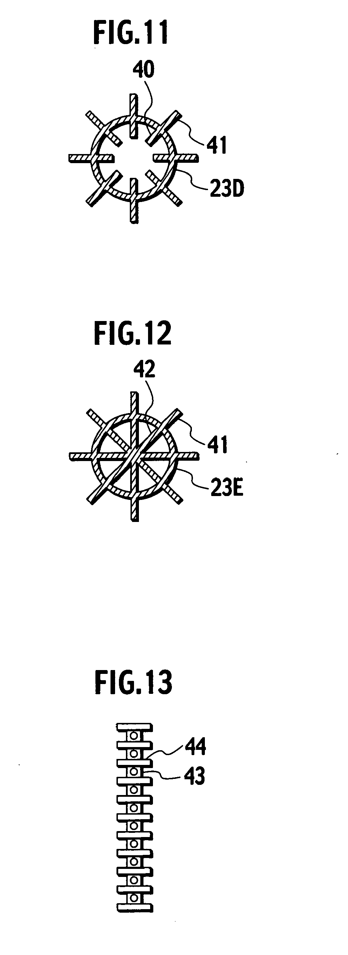

As shown in Fig. 11, a sixth embodiment has the following feature as compared with the third embodiment illustrated in Fig. 5. An insertion portion 23D serving as a pipe 21 extending from the radiator 2 to the expansion valve 4 has heat transfer fins 40 and 41 projecting from both the inner face and the outer face thereof in a radial direction and extending in a direction where the cooling medium flows or in a longitudinal direction of the insertion portion 23D.

While the higher-temperature cooling medium flows in the insertion portion 23D of the pipe 21 extending from the radiator 2 to the expansion valve 4, the heat transfer fins 40 and 41 enhance heat-exchange between the lower-temperature cooling medium and the higher-temperature cooling medium within the casing 24. Furthermore, when the cooling medium A with liquid phase within the casing 24 decreases, the heat transfer fins 41 positioned outside the insertion portion 23D contact with the cooling medium B with gas phase to enhance heat transfer.

The insertion portion 23D according to the sixth embodiment improves a heat transfer rate between the higher-temperature cooling medium fed from radiator 2 to the expansion valve 4 and the lower-temperature cooling medium returned from the evaporator 5 to the compressor 1, thus achieving a further compact apparatus configuration.

This embodiment illustrates the heat transfer fins 40 projecting inside the insertion portion 23D. The invention is not limited to this embodiment. As illustrated in Fig. 12, an insertion portion 23E may have a plurality of heat transfer fins 42 extending from an inner face thereof in a direction in which the cooling medium flows. The heat transfer fins 42 may cross the inner space of the insertion portion 23E in the radial direction.

Furthermore, as illustrated in Fig. 13, a flat multi-hole tube 43 may have heat transfer fins 44.

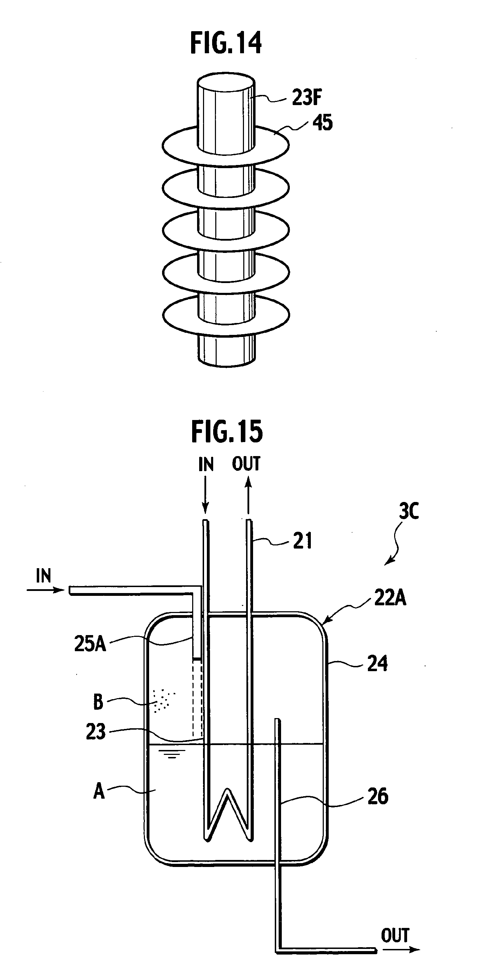

As illustrated in Fig. 14, an insertion portion 23F is formed with disc-like heat transfer fins 45.

### Seventh Embodiment

As shown in Fig. 15, an internal heat-exchanger 3C of a seventh embodiment has the following feature as compared with the first embodiment illustrated in Fig. 1. An accumulator 22A has an inlet pipe 25A positioned in the vicinity of the insertion portion 23. The cooling medium flowing in from the end portion of the inlet pipe 25A once contacts with the insertion portion 23.

While the higher-temperature cooling medium flows in the insertion portion 23 of the pipe 21 extending from the radiator 2 to the expansion valve 4, the lower-temperature cooling medium once contacts with the insertion portion 23, thus enhancing heat transfer.

According to the seventh embodiment, a heat transfer rate between the higher-temperature cooling medium fed from the radiator 2 to the expansion valve 4 and the lower-temperature cooling medium returned from the evaporator 5 back to the compressor 1 is improved, thus achieving a further compact configuration.

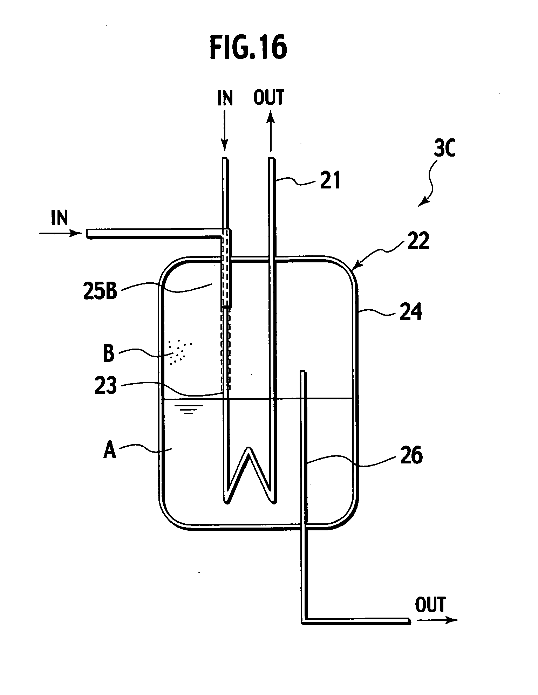

The embodiment illustrates a structure where the inlet pipe 25 of the accumulator 22 is positioned proximate to the insertion portion 23. The invention is not limited to this embodiment. As illustrated in Fig. 16, the inlet pipe 25B may be arranged concentrically with the insertion portion 23. The inlet pipe 25B encloses the insertion portion 23 from the outside thereof. The arrangement enhances heat transfer because the cooling medium flowing in from the end portion of the inlet pipe 25B once contacts with the insertion portion 23.

### Eighth Embodiment

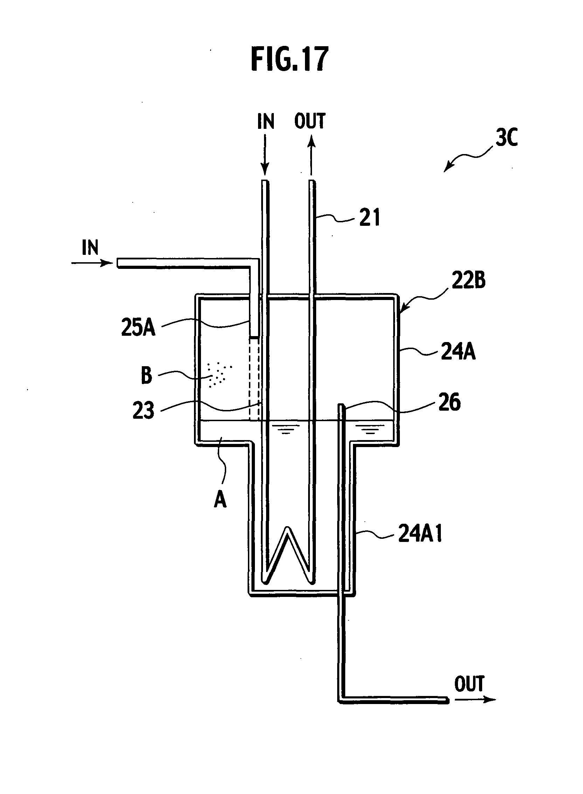

As shown in Fig. 17, an eighth embodiment has the following feature as compared with the seventh embodiment illustrated in Fig. 15. A casing 24A of an accumulator 22B has a lower portion 24A1 reduced in the cross sectional area.

In the eighth embodiment, the lower portion 24A1 of the casing 24A is narrowed and has a reduced cross sectional area. This configuration maintains high liquid face level even if the cooling medium A with liquid phase in the casing 24A decreases.

Even if the cooling medium A with liquid phase in the casing 24A decreases, while the higher-temperature cooling medium flows in the insertion portion 23, heat exchange is performed between the higher-temperature cooling medium and the cooling medium A with liquid phase within the casing 24A.

The invention provides a vehicular air-conditioner that is compact and has excellent cooling efficiency. While the invention is applied as a vehicular air-conditioner, it may be also broadly applied to an air-conditioner for general and industrial machinery.

Although the invention has been described above by reference to certain embodiments of the invention, the invention is not limited to the embodiments described above. Modifications and variations of the embodiments described above will occur to those skilled in the art, in light of the above teachings. The scope of the invention is defined with reference to the following claims.

## Claims

1. A vehicular air-conditioner comprising:
a compressor for compressing a refrigerant;
a radiator for cooling the refrigerant compressed by the compressor;
an expansion valve for receiving the refrigerant from the radiator to depressurize and expand the refrigerant;
an evaporator for evaporating the refrigerant expanded by the expansion valve to cool air passing through the evaporator; and
an accumulator for receiving the refrigerant from the evaporator to separate the refrigerant into a gas-phase refrigerant and a liquid-phase refrigerant,
the accumulator including an insertion portion inserted in the accumulator and included in a pipe arranged from the radiator to the expansion valve for exchanging heat between a refrigerant flowing through the insertion portion and at least the liquid-phase refrigerant in the accumulator.

2. The vehicular air-conditioner according to claim 1,
wherein the insertion portion is formed in a spiral.

3. The vehicular air-conditioner according to claim 1,
wherein the insertion portion includes a heat-transfer fin inside thereof.

4. The vehicular air-conditioner according to claim 1,
wherein the insertion portion includes a heat-exchange member having a flattened multi-hole tube.

5. The vehicular air-conditioner according to claim 1,
wherein the insertion portion includes a heat-exchange member having flattened multi-hole tubes arranged in multiple rows.

6. The vehicular air-conditioner according to claim 1,
wherein the insertion portion includes a heat-transfer fin outside thereof.

7. The vehicular air-conditioner according to claim 1,
wherein the accumulator includes an inlet pipe to introduce the refrigerant from the evaporator,
wherein the inlet pipe has an end located facing the insertion portion,
wherein the refrigerant flowing in from the end of the inlet pipe contacts the insertion portion.

8. The vehicular air-conditioner according to claim 1,
wherein the accumulator has a narrowed lower portion.
